(19) **Europäisches Patentamt**
**European Patent Office**
**Office européen des brevets**

(11) **EP 4 738 764 A1**

(12) **EUROPÄISCHE PATENTANMELDUNG**

(43) Veröffentlichungstag:
**06.05.2026   Patentblatt 2026/19**

(21) Anmeldenummer: **24209502.4**

(22) Anmeldetag: **29.10.2024**

(51) Internationale Patentklassifikation (IPC):
**H04L 9/40** (2022.01)

(52) Gemeinsame Patentklassifikation (CPC):
**H04L 63/1483;** G06F 2221/2119

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deutsche Telekom AG**
**53113 Bonn (DE)**

(72) Erfinder:
• **Minow, Jascha**
**64625 Bensheim (DE)**
• **Strohmer, Petra**
**64579 Gernsheim (DE)**

(74) Vertreter: **karo IP**
**Patentanwälte PartG mbB**
**Steinstraße 16-18**
**40212 Düsseldorf (DE)**

(54) **VALIDIERUNGS-PLATTFORM ZUR ERKENNUNG UND VERMEIDUNG VON BETRÜGERISCHEN INTERNET-SERVICEANBIETERN**

(57)     Die vorliegende Erfindung betrifft Techniken zur Erkennung eines betrügerischen Internet-Serviceanbieters, umfassend:
• Schritt: Erfassen einer Service-Anfrage (220) eines Internetnutzers (210), abgesendet mittels seines Nutzerendgerätes (215), wobei das Nutzerendgerät mit einem Kommunikationsnetzwerk eines Netzwerkanbieters verbunden ist;
• Schritt: Weiterleiten (250) der Service-Anfrage an eine Validierungs-Plattform (260) des Netzwerkanbieters, wobei die Validierungs-Plattform die URL und/oder der URL zugeordnete Informationen des aufgerufenen Internet-Serviceanbieters analysiert ();
• Schritt: Berechnen eines Betrugsscores basierend auf zumindest einer Überprüfungsvariante, insbesondere ist die zumindest eine Überprüfungsvariante eine Whitelist-Überprüfung von verifizierten Internet-Serviceanbietern;
• Schritt: Festlegen eines Schwellenwertes für den Betrugsscore, wobei bei Überschreiten des Schwellenwertes Maßnahmen ergriffen werden, um den Nutzer zu warnen oder den Zugriff auf den Internet-Serviceanbieter (245) zu blockieren, wobei der Nutzer bei einem Unterschreiten des Schwellenwertes an den Internet-Serviceanbieter (240) weitergeleitet wird.

Fig. 2

EP 4 738 764 A1

**Beschreibung**

Die Erfindung betrifft das technische Gebiet der Online-Sicherheit und bezieht sich insbesondere auf die Validierung von Internet-Serviceanbietern. Genauer gesagt betrifft die Erfindung eine Validierungs-Plattform, die anhand mehrerer Überprüfungsvarianten betrügerische Internet-Serviceanbieter erkennt und Nutzern einen sicheren Zugang zu verifizierten Internetdiensten ermöglicht.

Mit dem zunehmenden Wachstum des E-Commerce und der Verbreitung von Online-Dienstleistungen haben sich auch die Bedrohungen durch betrügerische Websites, insbesondere sogenannte Fake-Shops, erheblich verstärkt. Diese betrügerischen Internetseiten imitieren oft vertrauenswürdige Online-Shops oder bieten Produkte an, ohne jemals beabsichtigen, diese zu liefern. Sie locken Verbraucher in die Falle, um Zahlungen zu erhalten oder persönliche Daten zu stehlen.

Bisherige Ansätze zur Bekämpfung solcher betrügerischer Aktivitäten beruhen in der Regel auf der Verwendung von Sicherheitszertifikaten, wie SSL-Zertifikaten, oder auf der Integration von Qualitätssiegeln wie "Trusted Shops". Diese Mechanismen bieten jedoch nur eingeschränkten Schutz und haben sich als leicht manipulierbar erwiesen. So können SSL-Zertifikate lediglich die Sicherheit der Datenübertragung bestätigen, bieten aber keine Gewissheit über die Legitimität der Website selbst. Betrügerische Websites können durch den Erwerb von einfachen Domain-Validation-Zertifikaten das Vertrauen der Nutzer gewinnen, ohne dass eine tiefgehende Überprüfung der Website stattgefunden hat.

Zusätzlich führen viele bestehende Ansätze zur Sicherheitsüberprüfung von Webseiten eine Vielzahl von Einzelprüfungen durch, ohne diese in einen umfassenden Kontext zu setzen. Beispielsweise könnten Qualitätskontrollen isoliert durchgeführt werden, ohne den Zusammenhang zwischen verschiedenen sicherheitsrelevanten Aspekten (z. B. SSL-Verschlüsselung, Domain-Namen und Zahlungsoptionen) zu analysieren. Dies führt oft zu einer unvollständigen Erkennung betrügerischer Websites.

Darüber hinaus bieten aktuelle Filtersysteme kaum personalisierte Sicherheitsmechanismen, die auf den spezifischen Anforderungen der Nutzer basieren. Nutzer werden nicht aktiv in den Verifizierungsprozess eingebunden, und es fehlt an einer benutzerfreundlichen Möglichkeit, potenzielle Bedrohungen individuell zu erkennen und darauf zu reagieren.

Ein besonderes Risiko stellen auch exotische Zahlungsoptionen dar, die oft von betrügerischen Websites angeboten werden, um das Vertrauen der Nutzer zu gewinnen. Während Standard-Zahlungsanbieter wie Kreditkarten und PayPal umfassenden Sicherheitsprüfungen unterliegen, können weniger bekannte oder exotische Zahlungsoptionen von den bestehenden Überprüfungssystemen nicht angemessen bewertet werden. Dies führt dazu, dass Nutzer in betrügerische Zahlungsnetzwerke geraten, ohne eine echte Möglichkeit zu haben, die Legitimität dieser Zahlungsmethoden zu prüfen.

Ein weiteres Problem besteht in der fehlenden Flexibilität bei der Erkennung betrügerischer Websites. Die meisten aktuellen Systeme nutzen fest programmierte Regeln zur Erkennung von Betrugsmustern, die jedoch nicht in der Lage sind, aus neuen Betrugsfällen zu lernen oder Betrugsmuster dynamisch zu erkennen.

Die Aufgabe der vorliegenden Erfindung besteht darin, die genannten Nachteile des Standes der Technik zu überwinden und ein verbessertes Verfahren sowie eine Validierungs-Plattform zur Verfügung zu stellen, die betrügerische Internet-Serviceanbieter zuverlässig erkennt und den Nutzer bevorzugt in Echtzeit vor der Nutzung solcher Websites warnt oder deren Zugriff blockiert. Insbesondere ist es die Aufgabe der Erfindung die herkömmlichen statischen Ansätze zur Erkennung von Betrugsfällen zu überwinden.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Gemäß einem ersten Aspekt der Erfindung umfasst das Verfahren zur Erkennung eines betrügerischen Internet-Serviceanbieters:

- Erfassen einer Service-Anfrage eines Internetnutzers, abgesendet mittels seines Nutzerendgerätes, wobei das Nutzerendgerät mit einem Kommunikationsnetzwerk eines Netzwerkanbieters verbunden ist;

- Weiterleiten der Service-Anfrage an eine Validierungs-Plattform des Netzwerkanbieters, die die URL und/oder der URL zugeordnete Informationen des aufgerufenen Internet-Serviceanbieters analysiert; die der URL zugeordneten Informationen können beispielsweise von einer Validierungservice-Plattform extrahiert werden, indem die URL, insbesondere in einer gesicherten Browser-Umgebung, aufgerufen wird und die dargestellte Webseite analysiert wird; die der URL zugeordneten Informationen können aber auch solche Informationen umfassen, die der Netzwerkprovider über den Internet-Serviceanbieter kennt und diese hinterlegt hat;

- Berechnen eines Betrugsscores basierend auf zumindest einer Überprüfungsvariante, insbesondere ist die zumindest eine Überprüfungsvariante eine Whitelist-Überprüfung von verifizierten Internet-Serviceanbietern umfasst; die Whitelist ist ein Beispiel für die der URL zugeordnete Informationen;

- Festlegen eines Schwellenwertes für den Betrugsscore, wobei bei Überschreiten des Schwellenwertes Maßnahmen ergriffen werden, um den Nutzer zu warnen oder den Zugriff auf den Internet-Serviceanbieter zu blockieren, wobei der Nutzer bei einem Unterschreiten des Schwellenwertes an den Internet-Serviceanbieter weitergeleitet wird.

Dieses Verfahren nutzt eine strukturierte Überprüfung von Internet-Serviceanbietern, bei der die URL der aufgerufenen Website überprüft wird, um einen Betrugsscore zu berechnen. Durch die Whitelist-Überprüfung werden verifizierte und vertrauenswürdige Internet-Serviceanbieter direkt erkannt, was eine schnelle Identifizierung legitimer Websites ermöglicht. Bei einem hohen Betrugsscore können Maßnahmen ergriffen werden, die entweder eine Warnung an den Nutzer ausgeben oder den Zugriff auf die potenziell betrügerische Seite blockieren. Diese dynamische Reaktion auf den Betrugsscore bietet eine effektive und proaktive Methode, um Nutzer vor betrügerischen Websites zu schützen und gleichzeitig eine reibungslose Benutzererfahrung zu gewährleisten, wenn der Anbieter als sicher erkannt wird.

In einer Ausführungsform erfolgt als Überprüfungsvariante eine SSL-Verschlüsselungsüberprüfung, die die Art des verwendeten Zertifikats analysiert, einschließlich Domain-Validation-, Organization-Validation- oder Extended-Validation-Zertifikaten. Auch dies ist eine Ausführungsform für die der URL zugeordneten Informationen.

Die SSL-Verschlüsselungsüberprüfung stellt sicher, dass die Kommunikation zwischen dem Nutzer und dem Internet-Serviceanbieter sicher ist. Durch die Analyse des Zertifikatstyps kann die Vertrauenswürdigkeit des Internet-Serviceanbieters bewertet werden, da Extended-Validation-Zertifikate (EV) deutlich höhere Sicherheitsstandards aufweisen als Domain-Validation-Zertifikate (DV). Dies trägt dazu bei, betrügerische Websites, die SSL-Zertifikate nur minimal nutzen, schnell zu identifizieren und zu blockieren, während Websites mit robusteren Sicherheitsprotokollen als sicher eingestuft werden. Je schlechter die entsprechende Sicherheitsstufe ist, desto höher wird der berechnete Betrugsscore.

In einer Ausführungsform erfolgt die Analyse des Domain-Namens des Internet-Serviceanbieters, um Ähnlichkeiten mit bekannten betrügerischen Domains zu erkennen, um Domain-Spoofing zu identifizieren. Auch dies ist eine Ausführungsform für die der URL zugeordneten Informationen. Je ähnlicher der Domain-Name mit einer bekannten betrügerischen Domain ist, desto höher fällt der Betrugsscore aus.

Die Überprüfung des Domain-Namens bietet Schutz vor Domain-Spoofing, einer Technik, bei der Betrüger ähnlich aussehende Domains verwenden, um legitime Websites zu imitieren. Durch einen Vergleich der aufgerufenen Domain mit einer Datenbank bekannter betrügerischer Websites oder durch Mustererkennung kann frühzeitig erkannt werden, ob der Internet-Serviceanbieter möglicherweise betrügerisch agiert. Diese Methode verringert das Risiko, dass Nutzer unwissentlich auf gefälschte Websites zugreifen, die darauf abzielen, vertrauliche Informationen zu stehlen.

In einer Ausführungsform erfolgt eine Überprüfung der URL auf die Existenz und Korrektheit eines Impressums, wobei das Impressum auf die Übereinstimmung mit tatsächlichen Geschäftsadressen überprüft wird. Auch dies ist eine Ausführungsform für die der URL zugeordneten Informationen. Kann kein korrektes Impressum festgestellt werden, erhöht dies den Wert des Betrugsscores.

Das Vorhandensein eines Impressums und die Korrektheit der darin enthaltenen Daten sind wichtige Indikatoren für die Seriosität eines Internet-Serviceanbieters. Durch die Überprüfung der Angaben im Impressum und deren Abgleich mit öffentlichen Geschäftsverzeichnissen oder Geolocation-Diensten wird die Legitimität des Anbieters überprüft. Websites ohne gültiges oder korrektes Impressum werden schnell als betrügerisch erkannt, was den Nutzer vor weiteren Interaktionen mit solchen Websites schützt.

In einer Ausführungsform wird die Adresse im Impressum durch einen Abgleich mit einem Geolocation-Mapping-Service überprüft, um sicherzustellen, dass die angegebene Adresse existiert. Auch dies ist eine Ausführungsform für die der URL zugeordneten Informationen. Kann die Adresse nicht validiert werden, erhöht dies den Wert des Betrugsscores.

Die Validierung der im Impressum angegebenen Adresse durch Geolocation-Services ermöglicht eine zusätzliche Absicherung, dass der Anbieter tatsächlich an der angegebenen Adresse tätig ist. Diese Methode stellt sicher, dass gefälschte Adressen oder nicht existierende Standorte frühzeitig erkannt werden, wodurch die Wahrscheinlichkeit verringert wird, dass Nutzer auf betrügerische Websites hereinfallen.

In einer Ausführungsform erfolgt eine Überprüfung der Zahlungsoptionen auf der Website des Internet-Serviceanbieters, wobei legitime und exotische Zahlungsmethoden analysiert werden, um einen Einfluss auf den Betrugsscore zu nehmen. Auch dies ist eine Ausführungsform für die der URL zugeordneten Informationen.

Die Zahlungsoptionen eines Anbieters sind ein wichtiger Indikator für seine Seriosität. Durch die Überprüfung, ob der Anbieter legitime Zahlungsoptionen wie Kreditkarten oder PayPal anbietet, können Nutzer vor exotischen oder potenziell betrügerischen Zahlungsmethoden geschützt werden. Exotische Zahlungsmethoden, die oft von betrügerischen Websites verwendet werden, erhöhen den Betrugsscore und verhindern so, dass Nutzer auf unsichere Zahlungen hereinfallen.

In einer Ausführungsform erfolgt eine Überprüfung von Qualitätssiegeln, bei der die Authentizität von verlinkten Qualitätssiegeln wie Trusted Shops analysiert wird. Auch dies ist eine Ausführungsform für die der URL zugeordneten Informationen. Eine erfolglose Überprüfung des Qualitätssiegels, erhöht den Wert des Betrugsscores.

Qualitätssiegel wie "Trusted Shops" sollen Nutzern Sicherheit über die Seriosität einer Website geben. Allerdings können solche Siegel von Betrügern leicht kopiert und gefälscht werden. Durch eine tiefergehende Überprüfung der Authentizität dieser Siegel und der dahinterliegenden Verlinkungen können gefälschte Siegel erkannt werden, was dem Nutzer eine zusätzliche Sicherheitsebene bietet und verhindert, dass er auf manipulierte Websites hereinfällt.

In einer Ausführungsform erfolgt eine Überprüfung des Inhalts der Website des Internet-Serviceanbieters auf grammatikalische und orthographische Fehler, wobei das Vorhandensein solcher Fehler den Betrugsscore erhöht. Auch dies ist eine Ausführungsform für die der URL zugeordneten Informationen.

Websites mit zahlreichen grammatikalischen und orthographischen Fehlern weisen oft auf eine geringe Professionalität oder betrügerische Absichten hin. Oft handelt es sich in diesem Fall auch um Serviceanbieter aus anderen Ländern, den man juristisch nur sehr schwer habhaft werden kann. Durch die automatisierte Erkennung solcher Fehler in Verbindung mit anderen Überprüfungsvarianten wird die Wahrscheinlichkeit erhöht, dass betrügerische Websites erkannt werden. Dies führt zu einem erhöhten Betrugsscore, was dem Nutzer signalisiert, dass Vorsicht geboten ist.

In einer Ausführungsform erfolgt eine Überprüfung der Bilder auf der Website des Internet-Serviceanbieters, wobei Bilder auf ihre Qualität und Auflösung hin überprüft werden, um schlecht optimierte Bilder zu identifizieren. Auch dies ist eine Ausführungsform für die der URL zugeordneten Informationen. Je schlechter die Qualität der Bilder ist, desto höher fällt der Betrugsscores aus.

Schlecht optimierte oder minderwertige Bilder sind oft ein Indiz für Betrugsseiten, die wenig Aufwand in ihre visuelle Präsentation stecken. Durch die Analyse der Bildqualität und der verwendeten Auflösung kann die Validierungsplattform schnell erkennen, ob es sich um eine professionell erstellte Website handelt oder um eine betrügerische Seite, die aus gestohlenem oder minderwertigem Material besteht.

In einer Ausführungsform wird die Website mit einer Datenbank von bekannten Fake-Shops abgeglichen, um strukturelle Ähnlichkeiten mit betrügerischen Seiten zu erkennen und den Betrugsscore zu erhöhen. Auch dies ist eine Ausführungsform für die der URL zugeordneten Informationen.

Der Abgleich der aufgerufenen Website mit einer Datenbank bekannter Fake-Shops bietet eine wertvolle Methode, um neue betrügerische Seiten schnell zu erkennen. Ähnlichkeiten in Struktur, Layout oder verwendeten Techniken können automatisch identifiziert werden, wodurch der Betrugsscore erhöht wird. Dies schützt den Nutzer effektiv vor wiederkehrenden Betrugsmustern und ermöglicht eine schnelle Reaktion auf neu auftretende Bedrohungen.

Gemäß einem zweiten Aspekt der Erfindung ist eine Validierungs-Plattform offenbart. Die Validierungs-Plattform, die einem Netzwerkprovider zugeordnet ist, umfasst:

- ein Überprüfungsmittel, um eine URL auf zumindest eine Überprüfungsvariante zu überprüfen, wobei die zumindest eine Überprüfungsvariante eine Whitelist-Überprüfung verifizierter Internet-Serviceanbieter umfasst;

- ein Berechnungsmittel zur Berechnung eines Betrugsscores basierend auf der zumindest einen Überprüfungsvariante, wobei das Berechnungsmittel eine Funktion und/oder eine trainierte künstliche Intelligenz zur Berechnung ist;

- eine Schnittstelle zur Anzeige eines Warnhinweises für den Nutzer, wenn der Betrugsscore einen definierten Schwellenwert überschreitet.

Die Validierungs-Plattform kann mehrere Überprüfungsmechanismen in einer einheitlichen Lösung kombinieren, die speziell auf die Erkennung von betrügerischen Internet-Serviceanbietern ausgelegt ist. Durch den Einsatz einer trainierten künstlichen Intelligenz wird die Plattform kontinuierlich verbessert, indem sie aus historischen Betrugsfällen lernt und die Überprüfungsalgorithmen dynamisch anpasst. Die integrierte Warnfunktion ermöglicht eine unmittelbare Rückmeldung an den Nutzer, wodurch eine schnelle Reaktion auf potenzielle Bedrohungen gewährleistet wird. Die künstliche Intelligenz bietet insbesondere auch den Vorteil, dass auch basierend noch nicht bekannte Kombinationen oder Ausgestaltungen der Überprüfungsvarianten der Betrugsscores ermittelt werden kann.

Die künstliche Intelligenz (KI) in der Erfindung kann in einer Trainingsphase auf Basis eines überwachten Lernansatzes trainiert werden. Hierbei werden der KI verschiedene Datensätze präsentiert, die Merkmale der Internet-Serviceanbieter wie SSL-Verschlüsselung, Domain-Namen, Impressum und Zahlungsoptionen enthalten. Experten markieren diese Datensätze mit einem Betrugsscore, der angibt, ob der Anbieter vertrauenswürdig oder potenziell betrügerisch ist. Die KI lernt durch diese Zuordnungen, Muster und Korrelationen zu erkennen, die auf betrügerische Websites hinweisen. Ziel ist es, dass die KI nach der Trainingsphase in der Lage ist, neue Anfragen selbstständig zu bewerten und den Betrugsscore präzise zu berechnen.

Ein Beispiel: Die KI wird mit Datensätzen trainiert, die Informationen über SSL-Zertifikate enthalten. Experten markieren Websites mit Extended-Validation-Zertifikaten (höheres Sicherheitsniveau) mit einem niedrigen Betrugsscore, während Websites mit Domain-Validation-Zertifikaten (geringeres Sicherheitsniveau) einen höheren Score erhalten. Die KI lernt daraus, wie SSL-Zertifikate zur Vertrauenswürdigkeit eines Anbieters beitragen und kann später neue Anfragen entsprechend bewerten.

Während der Trainingsphase spielen die von Experten zugewiesenen Betrugsscores eine zentrale Rolle. Diese dienen als Referenzpunkte, anhand derer die KI lernt, legitime von betrügerischen Anbietern zu unterscheiden. Der Lernprozess ist iterativ, was bedeutet, dass die KI mit jeder Runde genauer wird und durch den Abgleich mit neuen Daten ihre Fähigkeiten kontinuierlich verbessert. Besonders vorteilhaft ist die dynamische Anpassung der KI: Sie kann sich an neuartige Betrugsmuster anpassen und lernt aus neuen Fällen, wodurch sich die Betrugserkennungsfähigkeiten ständig verfeinern. Dies führt zu einer automatisierten, hochpräzisen Betrugserkennung, die ohne manuelle Eingriffe funktioniert und gleichzeitig Fehlalarme reduziert.

Durch die ständige Verbesserung wird die KI in die Lage versetzt, neue Bedrohungen in Echtzeit zu erkennen und somit die Sicherheit der Nutzer kontinuierlich zu erhöhen.

Ein möglicher funktionaler Zusammenhang zur Berechnung des Betrugsscores basiert auf der Kombination mehrerer Überprüfungsvarianten, wobei jede Variante einen Subscore liefert, der den Beitrag dieser spezifischen Überprüfung zur Gesamtbewertung darstellt. Diese Subscores werden dann gewichtet und zu einem Gesamtscore, dem Betrugsscore, zusammengeführt, der angibt, wie wahrscheinlich es ist, dass es sich bei dem geprüften Internet-Serviceanbieter um einen betrügerischen Anbieter handelt.

Beispiel für den funktionalen Zusammenhang:

1. Erfassung von Überprüfungsvarianten: Verschiedene Überprüfungsvarianten wie SSL-Verschlüsselung, Domain-Namen-Analyse, Impressum und Zahlungsoptionen werden durchgeführt. Jede Variante liefert einen Subscore, der auf festgelegten Regeln oder durch maschinelles Lernen (KI) abgeleiteten Wahrscheinlichkeiten basiert.

2. Berechnung der Subscores:

◦ SSL-Verschlüsselung: Ein Anbieter mit einem Domain-Validation-Zertifikat erhält einen höheren Subscore (z. B. +0,3), während ein Anbieter mit einem Extended-Validation-Zertifikat einen niedrigeren Subscore (z. B. -0,2) erhält.

◦ Domain-Namen-Analyse: Ähnlichkeiten zu bekannten betrügerischen Domains oder ungewöhnliche Schreibweisen führen zu einem höheren Subscore (z. B. +0,4).

◦ Impressum: Fehlende oder ungültige Angaben im Impressum können zu einem Subscore von z. B. +0,5 führen, während korrekte Angaben zu einem niedrigeren Subscore (z. B. -0,1) führen.

◦ Zahlungsoptionen: Exotische oder unbekannte Zahlungsmethoden erhöhen den Subscore (z. B. +0,6), während etablierte Methoden wie PayPal oder Kreditkarten einen niedrigeren Subscore erzeugen (z. B. +0,1).

3. Gewichtung der Subscores: Bestimmte Überprüfungsvarianten können höher gewichtet werden, da sie in der Praxis stärkere Indikatoren für Betrug sind. Beispielsweise könnte die Zahlungsoptionen-Überprüfung eine höhere Gewichtung haben als die Impressumsprüfung, da Zahlungsoptionen ein direkter Hinweis auf die Seriosität des Anbieters sind. Dies könnte durch einen Gewichtungsfaktor ausgedrückt werden (z. B. Zahlungsoptionen * 1,5, Impressum * 1,0).

4. Zusammenführung der Subscores zum Betrugsscore:
Die Subscores werden addiert und ggf. nach ihrer Gewichtung summiert. Das Ergebnis dieser Berechnung ergibt den Betrugsscore. Der Betrugsscore könnte auf einer Skala von 0 bis 10 dargestellt werden, wobei höhere Werte auf eine größere Wahrscheinlichkeit eines Betrugs hindeuten. Ein Beispiel für die Formel zur Berechnung des Betrugsscores könnte wie folgt aussehen:

$$\text{Betrugsscore} = (\text{SSL}_{\text{Subscore}} + \text{Domain}_{\text{Subscore}} + \text{Impressum}_{\text{Subscore}} + \text{Zahlungsoptionen}_{\text{Subscore}} \times 1,5)$$

Angenommen, es wurden die Subscores für die Überprüfungsvarianten wie folgt ermittelt:

  ○ SSL-Verschlüsselung: +0,3

  ○ Domain-Namen: +0,4

  ○ Impressum: +0,5

  ○ Zahlungsoptionen: +0,6

Dann würde sich der Betrugsscore wie folgt berechnen:

$$Betrugsscore=(0,3+0,4+0,5+0,6\times1,5)=2,1;$$

Basierend auf dem berechneten Betrugsscore wird anschließend entschieden, ob der Nutzer gewarnt wird, der Zugang zur Website blockiert oder die Seite als sicher eingestuft wird. Typischerweise könnte ein Schwellenwert festgelegt werden, z. B. ein Betrugsscore von 3, ab dem eine Warnung an den Nutzer ausgegeben oder der Zugriff blockiert wird.

Die vorgenannten Zahlenwerte können flexibel angepasst und/oder geändert werden und sollen den Schutzumfang der Erfindung nicht beschränken, das sie nur illustrativen Zwecken dient.

In einer Ausführungsform verwendet die Validierungs-Plattform eine zentrale Datenbank, die regelmäßig aktualisiert wird und bekannte betrügerische Internet-Serviceanbieter enthält, um die Bewertung der URLs zu unterstützen.

Durch die Verwendung einer zentralen, regelmäßig aktualisierten Datenbank mit bekannten betrügerischen Internet-Serviceanbietern wird die Genauigkeit und Effizienz der Überprüfung erheblich verbessert. Die Plattform kann auf historische Daten zurückgreifen, um betrügerische Muster und Websites zu erkennen, die bereits als unsicher eingestuft wurden. Diese Echtzeit-Updates gewährleisten, dass neue Bedrohungen schnell identifiziert werden, was die Sicherheit der Nutzer weiter erhöht und die Reaktionszeit auf neuartige Betrugsversuche minimiert.

Gemäß einem dritten Aspekt der Erfindung ist ein Kommunikationssystem eines Netzwerkanbieters angegeben, umfassend:

- mindestens ein Nutzerendgerät, das mit einem Kommunikationsnetzwerk eines Netzwerkanbieters verbunden ist;

- eine Validierungs-Plattform, die Service-Anfragen von Nutzerendgeräten empfängt, die URLs der angefragten Internet-Serviceanbieter analysiert und einen Betrugsscore basierend auf zumindest einer Überprüfungsvariante berechnet, wobei die zumindest eine Überprüfungsvariante eine Whitelist-Überprüfung verifizierter Internet-Serviceanbieter umfasst;

- Mittel zur Weiterleitung von Warnhinweisen an das Nutzerendgerät, wenn ein hoher Betrugsscore festgestellt wird.

Dieses Kommunikationssystem integriert die Validierungs-Plattform nahtlos in das Netzwerk des Anbieters und stellt sicher, dass jede Anfrage eines Nutzers effizient überprüft wird. Durch die kontinuierliche Analyse der URLs und die Berechnung des Betrugsscores wird eine Echtzeit-Rückmeldung an den Nutzer ermöglicht, der entweder gewarnt oder beruhigt werden kann. Dies gewährleistet eine schnelle und effiziente Absicherung der Kommunikation zwischen dem Nutzer und dem Internet-Serviceanbieter. Zudem wird das Risiko, dass der Nutzer auf betrügerische Websites zugreift, erheblich reduziert.

In einer Ausführungsform ist die Validierungs-Plattform eingerichtet, den Zugriff auf den Internet-Serviceanbieter automatisch zu blockieren, wenn der Betrugsscore einen festgelegten Schwellenwert überschreitet.

Durch die automatische Blockierung des Zugriffs auf den Internet-Serviceanbieter bei Überschreiten eines definierten Betrugsscores wird die Sicherheit des Nutzers deutlich erhöht. Anstatt lediglich Warnungen auszugeben, verhindert das System proaktiv jegliche Interaktion mit betrügerischen Websites. Dies minimiert das Risiko, dass Nutzer sensible Daten preisgeben oder Transaktionen mit unsicheren Anbietern durchführen. Diese automatisierte Sicherheitsmaßnahme bietet zusätzlichen Schutz in Echtzeit, ohne dass der Nutzer selbst eingreifen muss.

Gemäß einem weiteren Aspekt der Erfindung umfasst ein Computerprogrammprodukt ein auf einem computerlesbaren Medium gespeichertes Programm, das eingerichtet ist, mittels einer Recheneinheit die Schritte des Verfahrens durchzuführen.

Dieses Computerprogrammprodukt ermöglicht die softwarebasierte Implementierung des Verfahrens, um eine umfassende und automatisierte Überprüfung von Internet-Serviceanbietern durchzuführen. Es nutzt die im Verfahren beschriebenen Überprüfungsmechanismen, wie etwa die Whitelist-Überprüfung und die Berechnung des Betrugsscores, um sicherzustellen, dass jede Anfrage eines Nutzers effizient und sicher verarbeitet wird. Die softwaregestützte Umsetzung ermöglicht eine einfache Integration in bestehende Systeme und bietet eine flexible und skalierbare Lösung zur Erhöhung der Online-Sicherheit. Durch den Einsatz des Computerprogramms kann die Erkennung betrügerischer Websites kontinuierlich verbessert und angepasst werden.

Im Folgenden werden bevorzugte Ausführungsbeispiele der vorliegenden Erfindung unter Bezugnahme auf die begleitenden Figuren erläutert:

Fig. 1:    zeigt den Ablauf des erfindungsgemäßen Verfahrens;

Fig. 2:    zeigt das erfindungsgemäße Kommunikationssystem eingerichtet zur Ausführung des Verfahrens gemäß Fig. 1.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

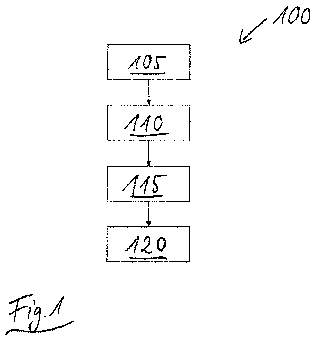

Fig. 1 zeigt den Ablauf des erfindungsgemäßen Verfahrens 100.

Das Verfahren 100 umfasst die folgenden Schritte:

- Schritt 105: Erfassen einer Service-Anfrage eines Internetnutzers, abgesendet mittels seines Nutzerendgerätes, wobei das Nutzerendgerät mit einem Kommunikationsnetzwerk eines Netzwerkanbieters verbunden ist;

- Schritt 110: Weiterleiten der Service-Anfrage an eine Validierungs-Plattform des Netzwerkanbieters, die die URL und der URL zugeordnete Informationen des aufgerufenen Internet-Serviceanbieters analysiert;

- Schritt 115: Berechnen eines Betrugsscores basierend auf zumindest einer Überprüfungsvariante, wobei die zumindest eine Überprüfungsvariante insbesondere eine erste Whitelist-Überprüfung von verifizierten Internet-Serviceanbietern umfasst;

- Schritt 120: Festlegen eines Schwellenwertes für den Betrugsscore, wobei bei Überschreiten des Schwellenwertes Maßnahmen ergriffen werden, um den Nutzer zu warnen oder den Zugriff auf den Internet-Serviceanbieter zu blockieren, wobei der Nutzer bei einem Unterschreiten des Schwellenwertes an den Internet-Serviceanbieter weitergeleitet wird.

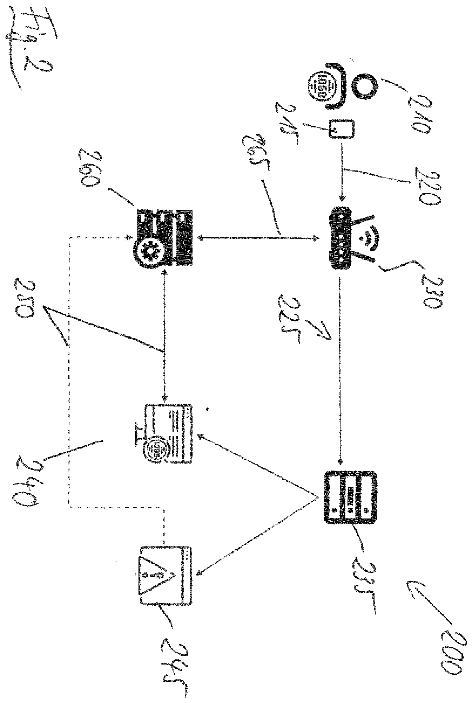

Fig. 2 zeigt ein erfindungsgemäße Kommunikationssystem 200 eingerichtet zur Ausführung des Verfahrens gemäß Fig. 1.

Ein Nutzer 210 sendet mittels seines Endgeräts 215, das insbesondere ein Smartphone oder ein Computer ist, eine Service Anfrage 220 an ein Kommunikationsnetzwerk 225 eines Netzwerkanbieters. Die Service-Anfrage 220 kann von dem Endgerät 115 beispielsweise über Mobilfunk direkt in das Kommunikationsnetzwerk 225 gesendet werden oder beispielsweise mittels eines Routers 230.

Die Service-Anfrage 220 umfasst eine Netzwerkadresse, insbesondere eine URL, eines Internet-Serviceanbieters an denen die Anfrage gerichtet ist. Zur Auflösung der Netzwerkadresse wird der Domainname an einen DNS Server 235 gesendet. Nach Ermittlung der entsprechenden IP-Adresse, wird die Service-Anfrage 220 an den Internet-Serviceanbieter weitergeleitet, der im nachfolgenden Ausführungsbeispiel ein vertrauenswürdiger Online-Shop 240 oder ein Fake-Online Shop 245 ist.

In Schritt 250 wird die URL und/oder der URL zugeordnete Informationen des aufgerufenen Internet-Serviceanbieters an einer Validierungs-Plattform 260 weitergeleitet, der diese Informationen analysiert und hierauf hin den Betrugsscores basierend auf zumindest einer Überprüfungsvariante berechnet.

Je nachdem ob der Betrugsscores den festgelegten Schwellenwert überschreitet oder nicht, kann die Validierungs-Plattform 260 dem Nutzer waren oder den Zugriff auf den Internet-Serviceanbieter blockieren oder den Nutzer an den Internet-Serviceanbieter weiterleiten, sodass dieser insbesondere den Onlineshop 240 zum einkaufen nutzen kann.

Ein besonders vorteilhafter Synergieeffekt ergibt sich durch die Kombination der SSL-Verschlüsselungsüberprüfung mit der Domain-Namen-Analyse. Diese Kombination ist äußerst effektiv, weil SSL-Zertifikate, insbesondere Domain-Validation-Zertifikate, oft von betrügerischen Websites genutzt werden, um eine falsche Sicherheit vorzutäuschen. Gleichzeitig werden Domain-Namen so verändert, dass sie einer legitimen Website sehr ähnlich sehen. Die SSL-Verschlüsselungsüberprüfung zeigt an, ob die Datenübertragung sicher ist, während die Domain-Namen-Analyse Phishing-Versuche und Domain-Spoofing aufdeckt. Der Vorteil dieser Kombination liegt darin, dass betrügerische Websites, die zwar ein gültiges SSL-Zertifikat haben, aber eine verdächtige Domain verwenden, schneller erkannt werden. Dies erhöht die Erkennungsgenauigkeit und reduziert gleichzeitig Fehlalarme bei legitimen Websites, die sicher und gut verschlüsselt sind. Zudem wird der Schutz vor Phishing-Websites signifikant verstärkt.

Ein weiterer Synergieeffekt ergibt sich durch die Verknüpfung der Impressumsüberprüfung mit dem Geolocation-Mapping der Geschäftsadresse. Diese Kombination erhöht die Zuverlässigkeit der Legitimitätsprüfung eines Internet-Serviceanbieters erheblich. Während die Impressumsüberprüfung sicherstellt, dass gesetzlich vorgeschriebene Angaben wie Firmenname und Adresse vorhanden sind, prüft das Geolocation-Mapping, ob die angegebene Adresse tatsächlich existiert. Diese beiden Maßnahmen ergänzen sich hervorragend, da viele betrügerische Websites entweder falsche oder gar keine gültigen Adressen angeben. Die Validierung der Adresse durch Geolocation stellt sicher, dass der Anbieter tatsächlich an dem angegebenen Ort tätig ist. Dies hilft, gefälschte Anbieter effizient zu erkennen und die Wahrscheinlichkeit zu minimieren, dass Nutzer mit solchen Websites interagieren.

Die Kombination der Überprüfung der Zahlungsoptionen mit der Analyse von Qualitätssiegeln bietet ebenfalls große Vorteile. Diese beiden Varianten ergänzen sich ideal, um die Seriosität eines Internet-Serviceanbieters zu bewerten. Zahlungsoptionen sind oft ein starker Indikator für die Vertrauenswürdigkeit eines Anbieters, während Qualitätssiegel Vertrauen bei den Nutzern schaffen sollen. Betrügerische Websites nutzen oft gefälschte Siegel und bieten unsichere oder exotische Zahlungsoptionen an. Diese Kombination liefert eine doppelte Absicherung: Wenn ein Anbieter unsichere oder exotische Zahlungsmethoden verwendet und gleichzeitig gefälschte Qualitätssiegel anzeigt, wird der Betrugsscore erheblich erhöht. Dies schützt den Nutzer sowohl vor unsicheren Zahlungsnetzwerken als auch vor manipulierten Vertrauenssignalen. Die Kombination dieser beiden Überprüfungen hilft, sichere Zahlungsoptionen in Verbindung mit authentischen Qualitätssiegeln zu identifizieren und seriöse Anbieter von betrügerischen abzugrenzen.

Ein weiterer Synergieeffekt ergibt sich aus der Kombination der Inhaltsanalyse (Grammatik und Orthographie) mit der Bildqualitätsprüfung. Diese Kombination ist besonders hilfreich, um die Professionalität einer Website zu beurteilen. Websites, die sowohl inhaltliche Fehler als auch schlecht optimierte Bilder aufweisen, werden schnell als unprofessionell erkannt, was oft ein Indiz für Betrug ist. Betrügerische Websites legen oft wenig Wert auf die sprachliche und visuelle Qualität, da ihr Hauptziel darin besteht, kurzfristig an Daten oder Zahlungen zu gelangen. Durch diese doppelte Überprüfung kann die Validierungsplattform die Wahrscheinlichkeit eines Betrugs sehr schnell einschätzen. Professionell gestaltete Websites, die sowohl gut geschriebenen Inhalt als auch qualitativ hochwertige Bilder verwenden, werden hingegen mit einem niedrigeren Betrugsscore versehen.

Schließlich bietet die Kombination der Domain-Namen-Analyse mit dem Abgleich einer Fake-Shop-Datenbank einen starken Synergieeffekt. Hierbei werden verdächtige Domain-Namen mit einer Datenbank bekannter Fake-Shops abgeglichen. Diese Kombination ist besonders nützlich, da viele betrügerische Websites auf ähnliche Muster oder Domain-Strukturen zurückgreifen, die in der Datenbank gespeichert sind. Wenn eine Domain in der Analyse auffällig erscheint und gleichzeitig Ähnlichkeiten zu bekannten Fake-Shops aufweist, kann der Betrugsscore schnell erhöht werden. Dies ermöglicht eine schnellere Erkennung und Blockierung von Websites, die bereits in betrügerischen Aktivitäten verwickelt waren, und minimiert das Risiko für die Nutzer, auf solche Seiten zuzugreifen.

Insgesamt bieten diese Kombinationen von Überprüfungsvarianten erhebliche Synergieeffekte, die die Betrugserkennung nicht nur präziser, sondern auch schneller machen. Die unterschiedlichen Prüfmethoden ergänzen sich gegenseitig und führen zu einem umfassenden Schutz der Nutzer vor betrügerischen Internet-Serviceanbietern.

Der technische Vorteil, nur solche Kombinationen von Überprüfungsvarianten zu nutzen, die einen Synergieeffekt haben, liegt in der Effizienzsteigerung und der Erhöhung der Genauigkeit bei der Betrugserkennung. Durch den gezielten Einsatz von Überprüfungsvarianten, die sich gegenseitig ergänzen und verstärken, kann die Validierungsplattform eine präzisere Bewertung der Sicherheit eines Internet-Serviceanbieters durchführen. Dies bietet mehrere konkrete Vorteile.

Zunächst führt die Nutzung solcher Synergien zur Reduzierung von Fehlalarmen. Wenn Überprüfungsvarianten miteinander kombiniert werden, die unterschiedliche, aber komplementäre Aspekte einer Website prüfen - etwa die Kombination von SSL-Verschlüsselung und Domain-Namen-Analyse - wird die Wahrscheinlichkeit von Fehlalarmen deutlich verringert. Solche Synergieeffekte sorgen dafür, dass Websites, die in einem Bereich möglicherweise Schwächen zeigen, wie etwa ein einfaches SSL-Zertifikat, nicht sofort als betrügerisch eingestuft werden, solange andere Faktoren wie der Domain-Name vertrauenswürdig sind. Dies führt zu einer insgesamt präziseren Einschätzung und verhindert unnötige Warnungen, was die Benutzerfreundlichkeit deutlich erhöht.

Ein weiterer Vorteil ist die verkürzte Reaktionszeit. Durch die Kombination von synergistischen Überprüfungsvarianten kann der Betrugsscore schneller und zuverlässiger berechnet werden. Die Plattform muss nicht jede Überprüfung einzeln auswerten, sondern kann durch die Synergieeffekte effizientere Entscheidungen treffen. Beispielsweise kann eine unsichere Zahlungsoption sofort Verdacht erregen, wird jedoch nur dann wirklich problematisch, wenn auch die Qualitätssiegel gefälscht sind. Diese Kombination führt zu einer schnelleren Betrugserkennung und ermöglicht eine zügige Blockierung potenzieller Bedrohungen.

Ein dritter wichtiger Aspekt ist die Ressourcenschonung. Der gezielte Einsatz von Überprüfungen mit Synergieeffekten spart Rechenressourcen und reduziert den Bedarf an unnötigen Prüfungen. Wenn die Kombination zweier Prüfungen bereits ein hohes Maß an Sicherheit oder Unsicherheit liefert, sind zusätzliche Prüfungen oft nicht mehr erforderlich. Dies macht den gesamten Prüfungsprozess effizienter und reduziert die Belastung der Infrastruktur, da die Plattform weniger Rechenkapazität und Zeit für unnötige Prüfungen aufwenden muss.

Darüber hinaus verbessert der Einsatz von Synergieeffekten die Betrugserkennung. Komplexe Betrugsmuster lassen sich durch kombinierte Prüfungen besser aufdecken, da sie ein vollständigeres Bild der Website liefern. Eine Website, die beispielsweise eine legitime Domain nutzt, aber gefälschte Qualitätssiegel und exotische Zahlungsmethoden aufweist, kann durch diese kombinierte Prüfung als betrügerisch erkannt werden. Die Einzelprüfung würde möglicherweise nicht genug Hinweise liefern, während die Kombination verschiedener Prüfungen die Erkennungsrate betrügerischer Websites signifikant erhöht.

Schließlich trägt der Einsatz von Synergieeffekten zur Skalierbarkeit und Anpassungsfähigkeit der Plattform bei. Da die Plattform durch diese Kombinationen optimiert wird, ist sie besser skalierbar und kann eine größere Anzahl von Anfragen verarbeiten. Außerdem lässt sich die Plattform leichter an neue Bedrohungen anpassen, da synergistische Kombinationen leicht durch neue Überprüfungsvarianten ergänzt werden können, ohne das gesamte System zu überlasten. Dies verbessert die Flexibilität und Zukunftssicherheit der Plattform erheblich.

**Patentansprüche**

1. Verfahren zur Erkennung eines betrügerischen Internet-Serviceanbieters, umfassend:

   • Schritt (105): Erfassen einer Service-Anfrage eines Internetnutzers, abgesendet mittels seines Nutzerendgerätes, wobei das Nutzerendgerät mit einem Kommunikationsnetzwerk eines Netzwerkanbieters verbunden ist;
   • Schritt (110): Weiterleiten der Service-Anfrage an eine Validierungs-Plattform des Netzwerkanbieters, wobei die Validierungs-Plattform die URL und/oder der URL zugeordnete Informationen des aufgerufenen Internet-Serviceanbieters analysiert;
   • Schritt (115): Berechnen eines Betrugsscores basierend auf zumindest einer Überprüfungsvariante, insbesondere ist die zumindest eine Überprüfungsvariante eine Whitelist-Überprüfung von verifizierten Internet-Serviceanbietern;
   • Schritt (120): Festlegen eines Schwellenwertes für den Betrugsscore, wobei bei Überschreiten des Schwellenwertes Maßnahmen ergriffen werden, um den Nutzer zu warnen oder den Zugriff auf den Internet-Serviceanbieter zu blockieren, wobei der Nutzer bei einem Unterschreiten des Schwellenwertes an den Internet-Serviceanbieter weitergeleitet wird.

2. Verfahren nach Anspruch 1, wobei als Überprüfungsvariante eine SSL-Verschlüsselungsüberprüfung erfolgt, die die Art des verwendeten Zertifikats analysiert, einschließlich Domain-Validation-, Organization-Validation- oder Extended-Validation-Zertifikaten.

3. Verfahren nach einem der vorhergehenden Ansprüche, wobei als Überprüfungsvariante die Analyse des Domain-Namens des Internet-Serviceanbieters erfolgt, um Ähnlichkeiten mit bekannten betrügerischen Domains zu erkennen, um Domain-Spoofing zu identifizieren.

4. Verfahren nach einem der vorhergehenden Ansprüche, wobei als Überprüfungsvariante eine Überprüfung der URL auf die Existenz und Korrektheit eines Impressums erfolgt, wobei das Impressum auf die Übereinstimmung mit tatsächlichen Geschäftsadressen überprüft wird.

5. Verfahren nach einem der vorhergehenden Ansprüche, wobei als Überprüfungsvariante die Adresse im Impressum durch einen Abgleich mit einem Geolocation-Mapping-Service überprüft wird, um sicherzustellen, dass die angegebene Adresse existiert.

6. Verfahren nach einem der vorhergehenden Ansprüche, wobei als Überprüfungsvariante eine Überprüfung der Zahlungsoptionen auf der Website des Internet-Serviceanbieters erfolgt, wobei legitime und exotische Zahlungsmethoden analysiert werden, um einen Einfluss auf den Betrugsscore zu nehmen.

7. Verfahren nach einem der vorhergehenden Ansprüche, wobei als Überprüfungsvariante eine Überprüfung von Qualitätssiegeln erfolgt, bei der die Authentizität von verlinkten Qualitätssiegeln wie Trusted Shops analysiert wird.

8. Verfahren nach einem der vorhergehenden Ansprüche, wobei als Überprüfungsvariante eine Überprüfung des Inhalts der Website des Internet-Serviceanbieters auf grammatikalische und orthographische Fehler erfolgt, wobei das Vorhandensein solcher Fehler den Betrugsscore erhöht.

9. Verfahren nach einem der vorhergehenden Ansprüche, wobei als Überprüfungsvariante eine Überprüfung der Bilder auf der Website des Internet-Serviceanbieters erfolgt, wobei Bilder auf ihre Qualität und Auflösung hin überprüft werden, um schlecht optimierte Bilder zu identifizieren.

10. Verfahren nach einem der vorhergehenden Ansprüche, wobei als Überprüfungsvariante die Website mit einer Datenbank von bekannten Fake-Shops abgeglichen wird, um strukturelle Ähnlichkeiten mit betrügerischen Seiten zu erkennen und den Betrugsscore zu erhöhen.

11. Validierungs-Plattform, die einem Netzwerkprovider zugeordnet ist, umfassend:

   • ein Überprüfungsmittel, um eine URL auf zumindest eine Überprüfungsvariante zu überprüfen, wobei die zumindest eine Überprüfungsvariante eine Whitelist-Überprüfung verifizierter Internet-Serviceanbieter umfasst;
   • eine Funktion und/oder eine trainierte künstliche Intelligenz zur Berechnung eines Betrugsscores basierend auf der zumindest einen Überprüfungsvariante;
   • eine Schnittstelle zur Anzeige eines Warnhinweises für den Nutzer, wenn der Betrugsscore einen definierten Schwellenwert überschreitet.

12. Validierungs-Plattform nach Anspruch 11, wobei die Plattform eine zentrale Datenbank verwendet, die regelmäßig aktualisiert wird und bekannte betrügerische Internet-Serviceanbieter enthält, um die Bewertung der URLs zu unterstützen.

13. Kommunikationssystem, umfassend:

   • mindestens ein Nutzerendgerät, das mit einem Kommunikationsnetzwerk eines Netzwerkanbieters verbunden ist;
   • eine Validierungs-Plattform, die Service-Anfragen von Nutzerendgeräten empfängt, die URLs der angefragten Internet-Serviceanbieter analysiert und einen Betrugsscore basierend auf zumindest einer Überprüfungsvariante berechnet, wobei die zumindest eine Überprüfungsvariante eine Whitelist-Überprüfung verifizierter Internet-Serviceanbieter umfasst;
   • Mittel zur Weiterleitung von Warnhinweisen an das Nutzerendgerät, wenn ein hoher Betrugsscore festgestellt wird.

14. Kommunikationssystem nach Anspruch 13, wobei die Validierungs-Plattform eingerichtet ist, den Zugriff auf den Internet-Serviceanbieter automatisch zu blockieren, wenn der Betrugsscore einen festgelegten Schwellenwert überschreitet.

15. Computerprogrammprodukt, das auf einem computerlesbaren Medium gespeichert ist, wobei das Programm eingerichtet ist, mittels einer Recheneinheit die Schritte des Verfahrens nach einem der Ansprüche 1 bis 10 durchzuführen.

100

105

110

115

120

Fig.1

Fig.2

| | Europäisches Patentamt<br>European Patent Office<br>Office européen des brevets | **EUROPÄISCHER RECHERCHENBERICHT** | **Nummer der Anmeldung**<br>EP 24 20 9502 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | US 7 698 442 B1 (KRISHNAMURTHY SATHVIK [US] ET AL) 13. April 2010 (2010-04-13)<br>* Spalte 8, Zeile 55 - Spalte 9, Zeile 61 *<br><br>* Spalte 13, Zeile 4 - Spalte 15, Zeile 50 *<br><br>----- | 1,3,<br>11-15<br>2,4-10 | INV.<br>H04L9/40 |
| X<br><br>A | US 2020/311790 A1 (KEREN YOAV [IL]) 1. Oktober 2020 (2020-10-01)<br>* Absatz [0027] - Absatz [0035] *<br>* Absatz [0039] *<br>----- | 1,11,13,<br>15<br>2-10,12,<br>14 | |
| Y | Omer Mahmood: "THREE PHASE CHECKING AGAINST PHISHING AND PHARMING ATTACKS", Proceedings of the 11th Annual Conference of Asia Pacific Decision Sciences Institute Hong Kong, 1. Juni 2006 (2006-06-01), Seiten 399-402, XP055285035, Gefunden im Internet: URL:http://gebrc.nccu.edu.tw/proceedings/APDSI/2006/399-402.pdf [gefunden am 2016-06-30] * das ganze Dokument *<br>----- | 2 | |
| Y | US 2015/052005 A1 (HOWE JUSTIN X [US]) 19. Februar 2015 (2015-02-19) * Absatz [0086] *<br>----- | 4,5 | RECHERCHIERTE SACHGEBIETE (IPC)<br><br>H04L<br>G06F |
| Y | MOSTARD WOUTER ET AL: "Combining Visual and Contextual Information for Fraudulent Online Store Classification", 2019 IEEE/WIC/ACM INTERNATIONAL CONFERENCE ON WEB INTELLIGENCE (WI), ACM, 14. Oktober 2019 (2019-10-14), Seiten 84-90, XP033641334, [gefunden am 2019-11-21] * das ganze Dokument *<br>-----<br>-/-- | 6 | |

Der vorliegende Recherchenbericht wurde für alle Patentansprüche erstellt

| Recherchenort | Abschlußdatum der Recherche | Prüfer |
|---|---|---|
| Den Haag | 21. März 2025 | Ströbeck, Anders |

EPO FORM 1503 03.82 (P04C03)

Seite 1 von 2

Europäisches Patentamt
European Patent Office
Office européen des brevets

# EUROPÄISCHER RECHERCHENBERICHT

**Nummer der Anmeldung**

EP 24 20 9502

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2004/243802 A1 (JORBA ANDREU RIERA [ES]) 2. Dezember 2004 (2004-12-02) <br> * Absatz [0025] * <br> ----- | 7 | |
| Y | US 2009/064330 A1 (SHRAIM IHAB [US] ET AL) 5. März 2009 (2009-03-05) <br> * Absatz [0129] * <br> ----- | 8 | |
| Y | MASANORI HARA ET AL: "Visual similarity-based phishing detection without victim site information", COMPUTATIONAL INTELLIGENCE IN CYBER SECURITY, 2009. CICS '09. IEEE SYMPOSIUM ON, IEEE, PISCATAWAY, NJ, USA, 30. März 2009 (2009-03-30), Seiten 30-36, XP031455788, ISBN: 978-1-4244-2769-7 <br> * das ganze Dokument * <br> ----- | 10 | |
| Y | JP 2021 170221 A (NETSTAR INC; JVIS CO LTD) 28. Oktober 2021 (2021-10-28) <br> * Absatz [0029] * <br> ----- | 9 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 21. März 2025 | Ströbeck, Anders |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 24 20 9502

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2025

| Im Recherchenbericht angeführtes Patentdokument | Datum der Veröffentlichung | Mitglied(er) der Patentfamilie | Datum der Veröffentlichung |
|---|---|---|---|
| US 7698442 B1 | 13-04-2010 | KEINE | |
| US 2020311790 A1 | 01-10-2020 | KEINE | |
| US 2015052005 A1 | 19-02-2015 | KEINE | |
| US 2004243802 A1 | 02-12-2004 | EP 1452938 A1 | 01-09-2004 |
| | | US 2004243802 A1 | 02-12-2004 |
| | | WO 03009109 A1 | 30-01-2003 |
| US 2009064330 A1 | 05-03-2009 | CA 2588138 A1 | 01-06-2006 |
| | | EP 1825398 A2 | 29-08-2007 |
| | | JP 2008521149 A | 19-06-2008 |
| | | US 2006069697 A1 | 30-03-2006 |
| | | US 2009064330 A1 | 05-03-2009 |
| | | US 2015237061 A1 | 20-08-2015 |
| | | WO 2006058217 A2 | 01-06-2006 |
| JP 2021170221 A | 28-10-2021 | JP 7626384 B2 | 04-02-2025 |
| | | JP 2021170221 A | 28-10-2021 |

Für nähere Einzelheiten zu diesem Anhang : siehe Amtsblatt des Europäischen Patentamts, Nr.12/82